# EUROPEAN PATENT APPLICATION

(11) **EP 4 787 111 A1**
(43) Date of publication of application: **05.08.2026**
(21) Application number: 25217919.7
(22) Date of filing: 24.11.2025
(51) Int. Cl.: G05D 1/60

(54) **MOWING VEHICLE AND METHOD OF CONTROLLING SUCH**

(30) Priority: 31.01.2025 US 202519042882
(71) Applicant: Deere & Company, Moline, IL 61265 (US)
(72) Inventor: Carnahan, Bryce, Mannheim (DE); Anderson, David, Mannheim (DE)
(74) Representative: Reichert, Christian

(57) **Abstract**

A mowing vehicle (100) is disclosed. The mowing vehicle (100) comprising: a set of cutting heads (104, 106); a propulsion subsystem (112); a steering subsystem (114); a patch cleanup control system (25) configured to receive a path plan (280) identifying a route for the mowing vehicle (100) to mow an area of interest , the route including passes across the area of interest and a cleanup lap (156) following a boundary (152) of the area of interest, the patch cleanup control system (25) being configured to receive an estimated location and size of an uncut patch (194, 196) in the area of interest that will not be mowed by the mowing vehicle (100) when following the route identified in the path plan (280), and to receive an indication of a patch cleanup pass (212) to cover the uncut patch (194, 196) based on the location and size of the uncut patch (194, 196), and to generate a modified route with the patch cleanup pass (212) added to the route, the patch cleanup control system (25) being configured to access a patch cleanup decision value to determine whether to control the mowing vehicle (100) to follow the route or the modified route and generate a decision output indicator based on the patch cleanup decision value; and a navigation system (246) configured to control the propulsion subsystem (112) and the steering subsystem (114) to follow the route or the modified route based on the decision output indicator. Furthermore, a method of controlling such mowing vehicle (100) is disclosed.

## Description

### FIELD OF THE DESCRIPTION

The present description relates to mowing machines. More specifically, the present description relates to performing sequenced control of a mowing machine for patch cleanup.

### BACKGROUND

There are a wide variety of different types of grass mowing vehicles used to mow golf courses, parks, athletic fields, and lawns. Grass mowing vehicles can include functionality for automatically controlling travel path and other operating settings of the grass mowing vehicles during a mowing operation. A path planner can be used to generate a path plan for a grass mowing vehicle that can include a route, including swaths (cutting passes) connected by turns, as well as other prescriptive operating settings along the route.

The discussion above is merely provided for general background information and is not intended to be used as an aid in determining the scope of the claimed subject matter.

### SUMMARY

A patch cleanup control system receives a path plan for a mowing vehicle and calculates the size and location of a portion of uncut grass that will remain uncut by the mowing vehicle when the mowing vehicle executes the path plan. The path cleanup control system computes cleanup passes that cover the portion of uncut grass and modifies the path plan to incorporate the cleanup passes in a desired sequence of passes.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a partial pictorial, partial schematic diagram of one example of a mowing vehicle.
FIG. 2A shows a plurality of a route for a mowing vehicle.
FIG. 2B illustrates how patches of grass can be missed by a mowing vehicle.
FIG. 3 is a block diagram showing one example of a mowing vehicle showing some functionality in more detail.
FIGs.4A and 4B (collectively referred to herein as FIG. 4) show a block diagram illustrating one example of controlling the operation of the mowing vehicle to perform sequenced patch cleanup.
FIG. 5 is a block diagram showing one example of functionality illustrated in other FIGs deployed in a remote server environment.
FIGs. 6, 7, and 8 show examples of mobile devices that can be used in the architectures and systems shown in other FIGs.
FIG. 9 is a block diagram showing one example of a computing environment that can be used in the architectures and systems shown in other FIGs.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, it is not uncommon for a mowing vehicle to mow an area to be mowed according to a path plan that is generated by a path planning system. The path planning system generates swaths (or cutting passes) and connects those swaths or cutting passes with turns to generate the path plan. One example of a site where a mowing vehicle is used to mow grass is a fairway on a golf course. The mowing vehicle often cuts the swaths or passes, traversing the fairway, and navigates the turns outside the boundary of the fairway.

When completing a swath, and approaching the boundary of the fairway, the mowing vehicle must raise the cutting heads so as not to scalp the rough area of the golf course. There is a mechanical delay between when a command is issued to raise a cutting head and when the cutting head comes out of engagement with the grass. Further, there may be scenarios, such as during autonomous operation, where additional limitations are placed on the mowing vehicle (e.g. to maintain extra clearance around the boundary of an obstacle). Therefore, there can be scenarios where the boundary of the fairway (either the external boundary of the fairway or an internal boundary around an obstacle or both) needs to be cleaned up after all the swaths or passes are cut, in order to mow the fairway properly. The path planning system thus plans the route of the mowing vehicle so that, after all of the swaths or passes are mowed, a single cleanup lap is mown around the boundary of the fairway.

However, there are some scenarios where patches of uncut grass are located on the fairway, interior of the cleanup lap that is performed by the mowing vehicle after the swaths or passes are cut. For instance, where the mowing vehicle enters or exits the fairway at a relatively sharp angle this can result in uncut areas that will not be covered by the cleanup lap.

By way of example, there may be obstacles which force the mowing vehicle to begin turning early, before it crosses the boundary of the cleanup lap. As one example, where a bunker is closely adjacent the boundary of the fairway, or lies inside the boundary of the fairway, this may force the mowing vehicle to begin turning in such a way that leaves uncut patches of grass that will not be covered by the cleanup lap.

The present description thus proceeds with respect to a patch cleanup system that receives the path plan from the path planning system and calculates the size and location of uncut patches of grass that will not be covered by the cleanup lap. The present system then automatically generates additional patch cleanup passes and augments the path plan with the additional patch cleanup passes so that the uncut patches will be mowed. In one example, a patch cleanup control system modifies the path plan so that the additional cleanup passes are executed prior to executing the swaths that are affected by the patch cleanup pass (such as those that intersect or are adjacent the patch cleanup passes) and prior to executing the cleanup lap. Also, there may be more than one patch cleanup pass per area being mowed (e.g., per fairway). Each patch cleanup pass may be sequenced before that swaths that are affected by that patch cleanup pass. In another example, all patch cleanup passes are executed before all swaths or passes are executed. This enhances the time efficiency and fuel efficiency with which the grass is mowed while maintaining desirable aesthetic characteristics. By automatically it is meant, in one example, that the step, process, or action is performed without further human involvement except, perhaps, to authorize or initiate the step, process, or action.

It will be noted that the present description can be applied to any of a wide variety of different grass mowing vehicles. Such vehicles can have any number of cutting heads and have different stances, such as a three wheel stance, a four wheel stance, etc. The present description proceeds with respect to one example of a grass mowing vehicle, but could just as easily proceed with respect to any of the other grass mowing vehicles.

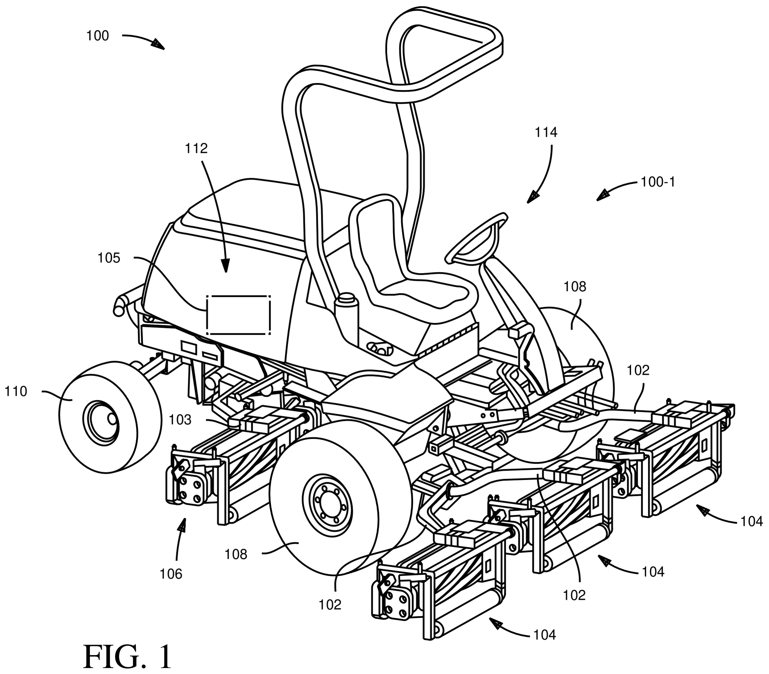

FIG. 1 is partial pictorial, partial schematic illustration of an example grass mowing vehicle 100. In the example shown in FIG. 1, grass mowing vehicle 100 is a fairway mowing vehicle 100-1. Fairway mowing vehicle 100-1 includes a plurality of front cutting units 104 and one or more rear cutting units 106. The position of front cutting units 104 and rear cutting units 106 may be controllably set and adjusted by virtue of one or more movable support apparatuses, illustratively shown as 102 and 103. Thus, movable support apparatuses 102 and 103 may include raise actuators and/or lower actuators that are used to raise the cutting units 104 and 106 out of engagement with the grass and to lower cutting units 104 and 106 into engagement with the grass in a selectively controllable manner. Fairway mowing vehicle 100-1 further includes left and right drive wheels 108 and one or more steerable left and right rear wheels 110.

Fairway mowing vehicle 100-1 includes a number of controllable subsystems, some of which are shown in FIG. 1. As illustrated, fairway mowing vehicle 100-1 includes a propulsion subsystem, indicated generally by arrow 112, and a steering subsystem, indicated generally by arrow 114. Propulsion subsystem 112 includes a powerplant (e.g., internal combustion engine, batteries, hybrid (combustion engine and batteries), etc.) as well as other drivetrain elements (e.g., gearbox, axles, brakes, actuators such as electric motors, etc.). In one particular example, propulsion subsystem 112 includes an electric motor corresponding to each of left and right drive wheels 108, wherein the corresponding motor is used to drive the left and right drive wheels 108. The electric motors are powered by on-board batteries which can be charged by an internal combustion engine or by another source.

Steering subsystem 114 includes one or more actuators (e.g., linear actuators, hydraulic actuators, etc.) and linkages used to change orientation (e.g., turn angle) of steerable left and right rear wheels 110 to change a heading of fairway mowing vehicle 100-1.

As illustrated in FIG. 1, fairway mowing vehicle 100-1 includes a mowing vehicle control system 105, one example of which is described in greater detail with respect to other FIGs. In one example, mowing vehicle control system 105 can include controller(s), sensors, computing device(s), etc. Mowing vehicle control system 105 is operable to send control signals to control controllable subsystems, including propulsion subsystem 112 and steering subsystem 114, to set and adjust operating parameters of fairway mowing vehicle 100-1, such as travel direction (or heading) and travel speed, raising and lowering the cutting units 104, 106 either as a group or in subsets or individually, and/or other operating parameters of fairway mowing vehicle 100-1. As will be discussed in more detail with respect to other FIGs., control system 105 can include, or be implemented by, memory storing instructions and one or more processors that execute the instructions. Further, control system 105 can include other items, such as a path planning system, a patch cleanup control system, etc., as will be shown in greater detail elsewhere herein. Portions of control system 105 can be distributed among various locations, such as on mowing vehicle 100-1, in a remote server system, on another remote system, or located the control system 105 can all be located at a single location. Control system 105 is shown on mowing vehicle 100-1 for the sake of example only.

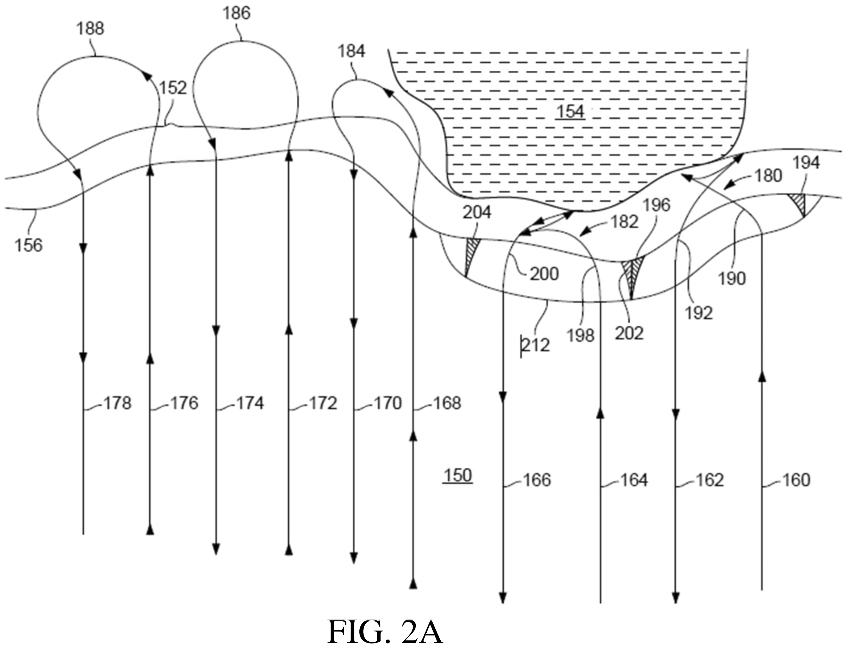

While not shown in FIG. 1, fairway mowing vehicle 100-1 can include several different sensors that can provide sensor data (e.g., sensor signals, images, etc.) that can be used by control system 105 to control fairway mowing vehicle 100-1. Some examples of such sensors are described below. FIG. 2A is a pictorial illustration showing a route for a fairway mowing machine 100-1 that can be followed to mow a fairway 150. In the example shown in FIG. 2A, fairway 150 has boundary 152 that divides the fairway from the rough. Also, a hazard, such as a bunker or sand trap 154 is shown adjacent to a portion of boundary 152 of fairway 150. FIG. 2A shows that the route followed by fairway mowing machine 100-1 is defined by a plurality of swaths or passes labeled 160-178 which traverse the fairway 150. Adjacent swaths or passes 160-178 traverse fairway 150 in opposite directions. Also, adjacent swaths 160-178 are connected by turns. In the example shown in FIG. 2A, only the turns on one side of fairway 150 (proximate boundary 152) are illustrated. It will be appreciated that turns are also executed to connect the swaths or passes 160-178 on the opposite side of the fairway that is not shown in FIG. 2A. Thus, FIG. 2A shows that turns 180-188 connect adjacent swaths or passes 160-178. For instance, a path planning system that plans the path shown in FIG. 2A may identify swaths or passes 176 and 178 and connect those swaths or passes with a turn 188. Similarly, the path planning system may connect the opposite side of swath 176 (not shown in FIG. 2A) with the opposite side of swath 174 (also not shown in FIG. 2A) and may connect swaths 174 and 172 with turn 186. Further, FIG. 2A shows that swaths 168 and 170 are connected by turn 184.

FIG. 2A also shows that the route for fairway mowing vehicle 100-1 includes a cleanup lap identified by line 156. Cleanup lap 156 is executed around the periphery of fairway 150 and interior of boundary 152, after the swaths 160-178 are mowed. Cleanup lap 156 generally covers uncut areas of grass closely adjacent boundary 152, which may not be cut due to mechanical delays in raising and lowering the cutting units 104 and 106, or for other reasons. FIG. 2A also shows that, in the area of bunker 154, fairway mowing vehicle 100-1 cannot perform a wide turn like turns 184, 186, and 188 that are outside boundary 152 of fairway 150. Instead, (e.g., referring to swath 160) as fairway mowing vehicle 100-1 approaches the end of swath 160, fairway mowing vehicle 100-1 must begin to turn early, before fairway mowing vehicle 100-1 crosses the boundary of the cleanup lap 156, along the arc generally identified by number 190. Fairway mowing vehicle 100-1 then executes a three point turn 180 and approaches the next subsequent swath or pass 162 along arc 192.

FIG. 2A thus shows that because of the position of bunker 154, fairway mowing vehicle 100-1 may need to make turns that leave uncut patches represented by crosshatched areas 194 and 196 that are on fairway 150 but outside the boundary 156 of the cleanup lap. Thus, uncut patches 194, 196 will not be covered by the cleanup lap 156.

The same can be seen with respect to the three-point turn connecting passes 164 and 166. Because fairway mowing vehicle 100-1 begins its turn along arc 198 and ends the turn along arc 200, fairway mowing vehicle 100-1 will leave uncut patches 202 and 204 that are also in fairway 150 but outside the boundary 156 of the cleanup lap so uncut areas 202, 204 will not be covered by the cleanup lap.

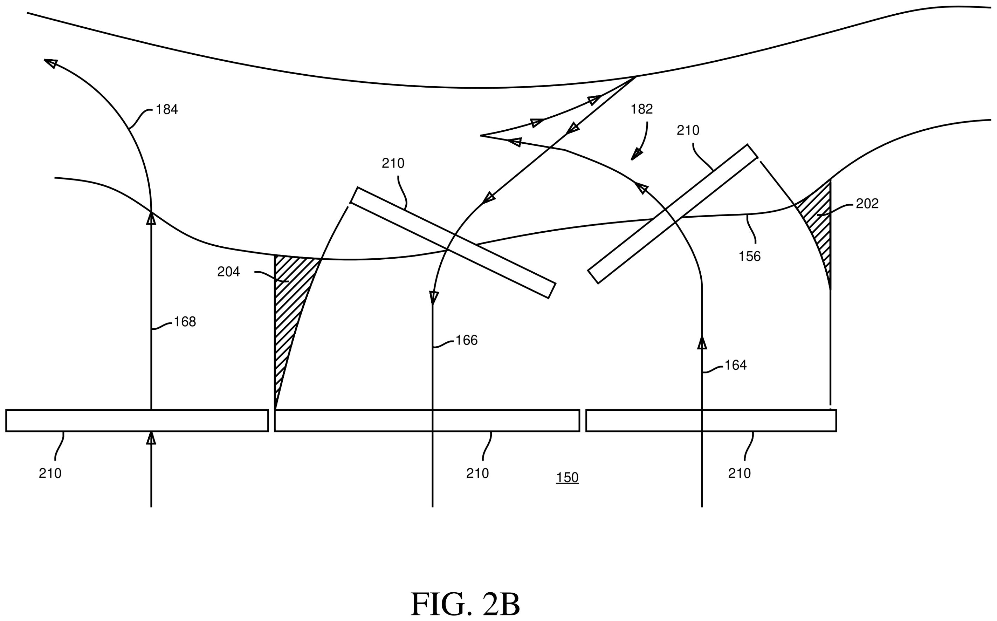

FIG. 2B illustrates this problem in more detail. FIG. 2B is an enlarged view of turn 182. Similar items to those shown in FIG. 2A are similarly numbered. The width of the cutting units 104,106 is represented by rectangle 210 in FIG. 2B. It can be seen in FIG. 2B that, because fairway mowing vehicle 100-1 needs to begin turn 182 early (before reaching the boundary of the cleanup lap 156), the cutting heads miss area 202. Similarly, because fairway mowing vehicle 100-1 must begin its turn early when re-entering the fairway and following pass 166, the cutting head will miss patch 204. Both patches 202 and 204 are located interior to the cleanup lap 156 and within fairway 150. Therefore, referring again to FIG.2A, once mowing vehicle control system 105 receives the path plan showing the route defined by the swaths 160-178 and turns 180-188 and cleanup lap 156, mowing vehicle control system 105 calculates the size and location of any uncut patches of grass 194, 196, 202, and 204 which will remain after fairway mowing vehicle 100-1 executes the path plan. Mowing vehicle control system 105 then automatically calculates one or more additional patch cleanup passes that can be executed to cover the un-mowed patches 194, 196, 202, and 204.

In the example illustrated in FIG. 2A, such an additional patch cleanup pass is identified by boundary line 212.

It will be noted that the same type of problem illustrated in FIGs 2A and 2B can manifest in other scenarios as well. For example, where there is an obstacle (e.g. a sand bunker) internal to fairway 150, such an obstacle is separated from the fairway by an internal boundary around the obstacle. Executing the swaths and turns in the area of the internal obstacle can result in uncut areas or patches that are not covered by a cleanup lap executed along the boundary of the internal obstacle. Thus, control system 150 can identify the size and shape of the uncut patches around the internal obstacle, and outside a cleanup lap, and calculate an additional cleanup pass that can be executed to cover the uncut patches.

Also, in one example, mowing vehicle control system 105 incorporates the additional patch cleanup pass 212 into the path plan so that patch cleanup pass 212 is mowed first, before the swaths or passes that are intersected by or adjacent to patch cleanup pass 212 (e.g., patch cleanup pass 212 is mowed before swaths or passes 160-166 or before swaths or passes 160-168 are mowed) and before the cleanup lap 156 is mowed. Then, after any patch cleanup passes are executed, the swaths or passes 160-166 (or 160-168, as desired) are executed, and finally the cleanup lap 156 is executed. In this way, the aesthetics of the additional cleanup pass 212 will substantially match those corresponding to swaths or passes 160-166 and the other swaths or passes 168-178. Where there are multiple patch cleanup passes per fairway (e.g., where there are multiple obstacles per fairway, and where there is a patch cleanup pass for each obstacle) then the multiple patch cleanup passes can be executed one after the other and before the affected swaths or passes are executed, or the patch cleanup passes may be inserted between swaths or passes so long as each patch cleanup pass is executed before the swaths or passes affected by that patch cleanup pass are executed after the corresponding patch cleanup pass is executed.

It will also be noted that, in one example, mowing vehicle control system 105 can calculate metrics corresponding to the additional patch cleanup passes. Such metrics can identify the location and size of the patches, the fuel that will be used to perform the additional patch cleanup passes, the time that will be consumed in performing the additional patch cleanup passes, etc. Such metrics can be surfaced for an operator (such as using an interface generated on a mobile device or another interface) so that the operator can authorize the execution of the additional patch cleanup passes. For instance, it may be that the operator knows that the fairway will be mowed in the opposite direction in two days and therefore the uncut patches will be mowed at that time. In that scenario, the operator may determine that it is not worth the extra fuel and/or time to perform the additional patch cleanup passes. Thus, an operator may authorize or cancel the additional patch cleanup passes, as desired.

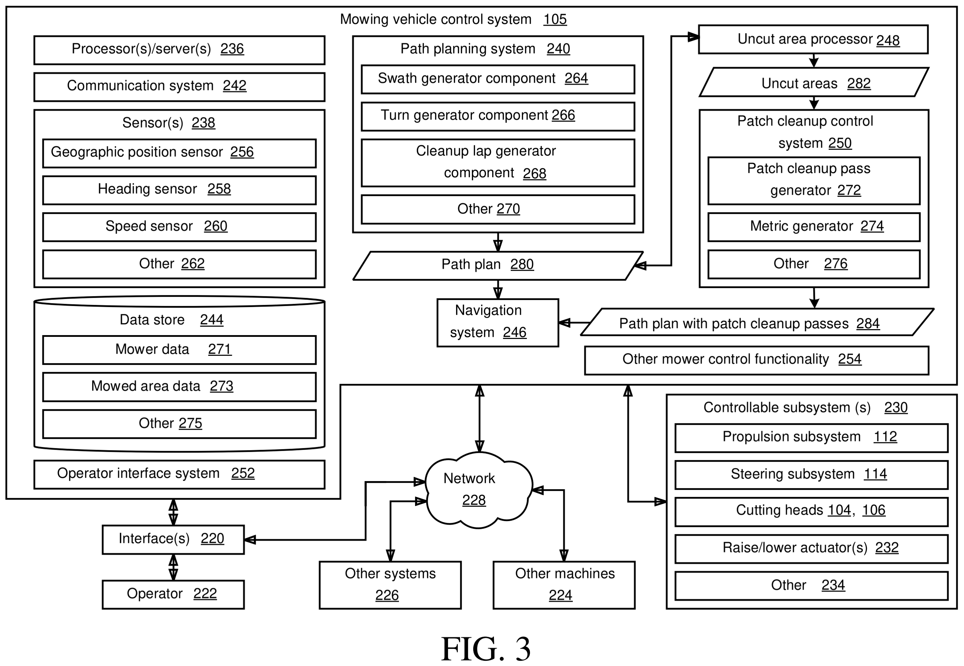

FIG. 3 shows one example of a block diagram illustrating mowing vehicle control system 105 in more detail. FIG. 3 shows that control system 105 can generate interfaces 220 for interaction by an operator 222. Interfaces 220 may be generated on a mobile device used by operator 222 or in other ways. FIG. 3 also shows that mowing vehicle control system 105 can communicate with other machines 224 and/or other systems 226 over network 228. Other machines 224 can be other mowing vehicles, tender vehicles, or other machines. Other systems 226 can be manager computing systems, systems deployed in a remote server architecture (such as in the cloud) or other systems. Therefore, network 228 can be a wide area network, a local area network, near field communication network, a Wi-Fi or Bluetooth network, a cellular communication network, and/or any of a wide variety of other networks or combinations of networks.

FIG. 3 also shows that vehicle control system 105 can control one or more controllable subsystems 230. Controllable subsystems 230 can include propulsion subsystem 112, steering subsystem 114, cutting heads 104, 106, a set of raise and lower actuators 232 (which may hydraulic cylinders, pneumatic cylinders, electric cylinders, etc. that are part of movable support apparatuses 102, 103), and any of wide variety of other controllable subsystems 234.

In the example shown in FIG. 3, mowing vehicle control system 105 includes one or more processors or servers 236, sensors 238, path planning system 240, communication system 242, data store 244, navigation system 246, uncut area processor 248, patch cleanup control system 250, operator interface system 252, and other mower control functionality 254. Sensors 238 can include geographic position sensor(s) 256, heading sensor(s) 258, speed sensor(s) 260, and any of wide variety of other sensors 262. Path planning system 240 can include swath or pass generator component 264, turn generator component 266, cleanup lap generator component 268, and other items 270. Data store 244 can include mower data 271, mowed area data 273, as well as other data 275. Mower data 271 may define the dimensions of the mower, as well as raise and lower times indicative of how long it takes to raise and lower the cutting heads 104, 106 once a raise or lower command is issued, as well as any of wide variety of other mower data. Mowed area data 273 may include boundary data that geographically identifies the boundaries of the fairway 150 being mowed, obstacle data that geographically identifies the location of obstacles (such as bunker 154 and/or other obstacles), and the location and size of other items in the mowed area. The mowed area data 273 may be provided in the form of a map or according to other data structures. Patch cleanup control system 250 can include cleanup pass generator 272, metric generator 274, and other items 276. Before describing the overall operation of mowing vehicle control system 105 in identifying and executing a patch cleanup pass, a description of some of the items in mowing vehicle control system 105, and their operation, will first be provided.

Communication system 242 facilitates communication of the items on mowing vehicle 100 with one another and can also facilitate communication over network 228. Therefore, communication system 248 can include a controller area network (CAN) bus and bus controller, a wide or local area communication system, a Bluetooth, Wi-Fi, or near field communication system, a cellular communication system or any of a variety of other communication systems or combinations of systems.

Geographic position sensor(s) 256 illustratively sense or detect the geographic position or location of a grass mowing vehicle 100. Geographic position sensor(s) 256 can include, but are not limited to, a global navigation satellite system (GNSS) receiver that receives signals from a GNSS satellite transmitter. Geographic position sensor(s) 256 can also include a real-time kinematic (RTK) component that is configured to enhance the precision of position data derived from the GNSS signal. Geographic position sensor(s) 256 can include one or more RADAR sensors, LIDAR sensor, ultrasonic sensors, or cameras that generate sensor data for use in Simultaneous Localization and Mapping (SLAM) to identify the position or location of a grass mowing vehicle 100. Geographic position sensor(s) 256 can include a dead reckoning system, a cellular triangulation system, or any of a variety of other geographic position sensors.

Heading sensor(s) 258 detect a heading characteristic (e.g., travel direction) of a grass mowing vehicle 100. Heading sensor(s) 258 can include sensors that sense the movement or orientation (e.g., turn angle) of ground-engaging traction elements (e.g., wheels 110) or movement of components coupled to the ground engaging traction elements (e.g., steering shaft) or other elements, or can utilize signals received from other sources, such as geographic position sensor(s) 256. Thus, while heading sensor(s) 258 as described herein are shown as separate from geographic position sensor(s) 256, in some examples, vehicle heading is derived from signals received from geographic position sensor(s) 256 and subsequent processing. In other examples, heading sensors 258 are separate sensors and do not utilize signals received from other sources.

Speed sensor(s) 260 detect one or more speed characteristics (e.g., travel speed, acceleration, deceleration, etc.) of a grass mowing vehicle 100. Speed sensor(s) 260 can include sensors that sense the movement (e.g., rotation) of ground-engaging elements (e.g., wheels 108 or wheels 110) or movement of components coupled to the ground engaging elements (e.g., drive shafts, axles), or other elements. Speed sensor(s) 260 can include sensors, such as LIDAR or RADAR. In some examples, signals received from other sources, such as geographic position sensor(s) 256, can be utilized to detect speed characteristics. Thus, while speed sensor(s) 260 as described herein are shown as separate from geographic position sensor(s) 256, in some examples, vehicle speed is derived from signals received from geographic position sensor(s) 256 and subsequent processing. In other examples, speed sensor(s) 260 are separate sensors and do not utilize signals received from other sources.

Path planning system 240 can be any of wide variety of different path planning systems. Such systems can include graph-based methods (such as A* and Dijkstra algorithms), sampling-based methods (such as rapidly exploring random tree-RRT-algorithms), gradient-based systems (such as artificial potential field systems), optimization-based systems (such as using model predictive control), deep supervised learning path planning techniques, interpolation curve techniques, genetic algorithms, meta-heuristic algorithms, and/or any of wide variety of other systems. Path planning system 240 illustratively includes a swath or pass generator component 264 that generates the swaths or passes 160-178 and turn generator component 266 that generates the turns connecting the swaths. Cleanup lap generator component 268 calculates the route for the cleanup lap 156 around the boundary of the mowed area.

Path planning system 240 generates and outputs path plan 280. Path plan 280 can then be provided to uncut area processor 248. Uncut area processor 248 automatically accesses the mower data 271 and mowed area data 273 and uses the path plan 280 to identify any uncut patches 194, 196, 202, and 204 that will remain on fairway 150 if navigation system 246 navigates grass mowing vehicle 100 according to the path plan 280. Uncut area processor 248 outputs an indication of the uncut areas 282. The indication of the uncut areas 282 will illustratively identify the size and location of the uncut areas. Patch cleanup control system 250 then automatically uses cleanup pass generator 272 to automatically generate additional patch cleanup passes (such as patch cleanup pass 212 shown in FIG. 2A) that can be executed to mow all of the uncut areas 282. Cleanup pass generator 272 can be similar to, or part of, path planning system 240, or a separate path planning system or algorithm.

Metric generator 274 calculates metrics corresponding to execution of the cleanup passes. For instance, metric generator 274 can access mower data 271 and generate an output indicative of the amount of fuel that will be used, and/or the amount of time that will be consumed, and/or any other metrics corresponding to execution of the additional patch cleanup passes. Patch cleanup control system 250 can automatically provide information to operator interface system 252 which can surface that information for operator 222. In response, operator 222 can interact with interface 220 to authorize execution of the patch cleanup passes or to ignore or cancel the patch cleanup passes. For instance, patch cleanup control system 250 can use operator interface system 252 to surface the location and size of the uncut patches, the fuel efficiency, and time efficiency metrics, along with any other desirable information so that operator 222 can decide whether to authorize or reject the additional patch cleanup passes. The interface 220 may have operator input mechanisms such as links or icons or buttons that can be actuated by operator 222 to accept or reject the patch cleanup passes.

Assuming that operator 222 authorizes or accepts the patch cleanup passes, then patch cleanup control system 250 automatically modifies path plan 280 to include the patch cleanup passes and provides an output indicative of the path plan with the patch cleanup passes 284 to navigation system 246. In one example, patch cleanup control system 250 arranges the path plan with the patch cleanup passes 284 so that the patch cleanup passes (e.g. pass 212 shown in FIG. 2A) is performed first, before the swaths or passes 160-166 (or 160-168) that intersect (or are adjacent to) the patch cleanup pass 212 are performed and before the cleanup lap 156 is performed.

Navigation system 246 can then execute either the path plan 280 (where the operator 222 has rejected the additional path cleanup passes) or the path plan with patch cleanup passes 284 (where operator 222 has authorized or accepted the patch cleanup passes).

Navigation system 246 can include any of wide variety of different types of systems that control steering subsystem 114 and propulsion subsystem 112 to navigate grass mowing vehicle 100 along the path plan 280 or path plan with patch cleanup passes 284. Navigation system 246 can thus include decision-making algorithms that are used to decide when to change the speed and/or direction of grass mowing vehicle 100 based upon path plan 280 or path plan with patch cleanup passes 284. It will also be noted that other mower control functionality 254 can be used to control cutting heads 104, 106 and raise/lower actuators 232, to initiate and/or terminate cutting operations, to move the cutting heads 104, 106 into engagement with the grass and out of engagement with the grass at desired locations or times, among other things.

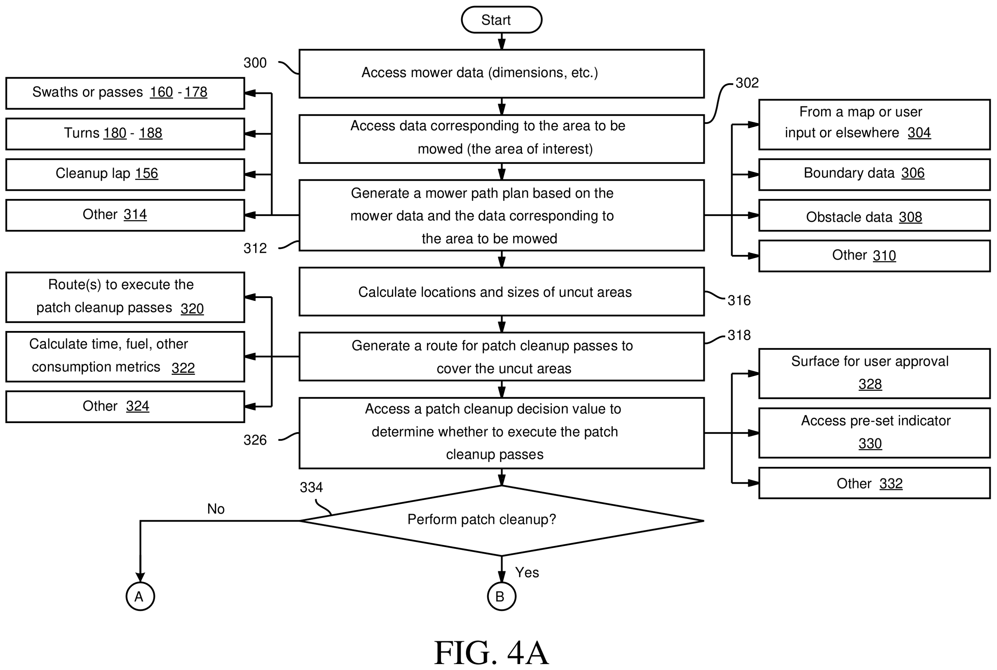

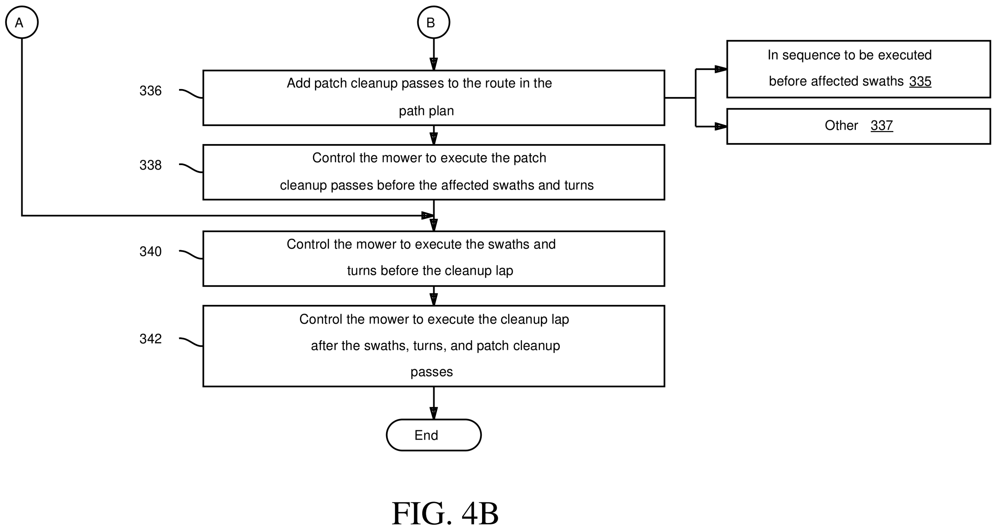

FIGs. 4A and 4B (collectively referred to herein as FIG. 4) show a flow diagram illustrating one example of the operation of mowing vehicle control system 105 in identifying patch cleanup passes and executing a path plan with or without the patch cleanup passes. It is first assumed that path planning system 240 accesses the mower data 271 and mowed area data 273. Accessing the mower data is indicated by block 300 in the flow diagram of FIG. 4. Accessing data corresponding to the area to be mowed (e.g., corresponding to fairway 150) is indicated by block 302 in the flow diagram of FIG. 4. The mowed area data 273 can be in the form of a map or a user input (e.g., a user tracing an area on a map or satellite image displayed on a user interface display) or from other sources as indicated by block 304 in the flow diagram of FIG. 4. The mowed area data 273 illustratively includes boundary data defining the boundary of the mowed area, as indicated by block 306, and obstacle data identifying obstacles in or adjacent the area to be mowed, as indicated by block 308. The mowed area data 273 can include any of a wide variety of other data 310 as well.

Path planning system 240 then automatically generates a path plan 280 based on the mower data and the data corresponding to the area to be mowed, as indicated by block 312. Swath generator component 264 can generate the swaths or passes 160-178 and turn generator component 266 can generate the turns 180-188 corresponding to the path plan. Cleanup lap generator 268 can generate the cleanup lap 156. Other items 314 can be generated as part of the path plan 280 as well.

Uncut area processor 248 then accesses any desired data (such as the mower data 271, the mowed area data 273, etc.) and automatically calculates locations and sizes of uncut areas that will remain uncut even after grass mowing vehicle 100 executes path plan 280. Calculating the locations and sizes of uncut areas is indicated by block 316 in the flow diagram of FIG. 4.

Based upon the uncut areas 282, patch cleanup pass generator 272 automatically generates a route for each patch cleanup pass that is needed to cover the uncut areas, as indicated by block 318. There may be one or more patch cleanup passes per area being mowed (e.g., per fairway). Patch cleanup pass generator 272 can output the routes that can be executed to perform the patch cleanup passes, as indicated by block 320. Metric generator 274 can calculate time, fuel, and other consumption metrics or other metrics corresponding to performance of the patch cleanup passes as indicated by block 322. Patch cleanup control system 250 can generate other items as well, as indicated by block 324.

Patch cleanup control system 250 then accesses a patch cleanup decision value to determine whether the patch cleanup passes are to be incorporated into the path plan 280 and executed by grass mowing vehicle 100. There may be a separate patch cleanup decision value for each patch cleanup pass, or a patch cleanup decision value for a set of patch cleanup passes. Accessing a patch cleanup decision value to determine whether the patch cleanup passes are to be executed is indicated by block 326 in the flow diagram of FIG. 4. For instance, operator interface system 252 can automatically surface an indication of the patch cleanup passes and the metrics for operator approval, as indicated by block 328. The operator approval thus serves as the patch cleanup decision value. Patch cleanup control system 250 can also access a preset default indicator that may indicate whether patch cleanup passes are to be executed by default, under what circumstances the patch cleanup passes are to be executed, etc., as indicated by block 330. Determining whether the patch cleanup passes are to be executed can be performed in other ways as well, as indicated by block 322.

If the patch cleanup passes are to be executed, as determined at block 334, then patch cleanup control system 250 automatically adds the patch cleanup passes to the mower path in path plan 280 to obtain the path plan with cleanup passes 284, as indicated by block 336. In one example, the patch cleanup passes are added to the sequence of passes so that the patch cleanup passes are executed before the swaths and turns that touch or are influenced by the patch cleanup pass are executed and before the cleanup lap is executed. Adding the patch cleanup passes in sequence to be executed in this way is indicated by block 335. The patch cleanup passes can be added in other ways as well as indicated by block 337. The grass mowing vehicle 100 is then automatically controlled based on the path plan with patch cleanup passes 284. Controlling the grass mowing vehicle 100 to execute the patch cleanup passes before the affected swaths and turns is indicated by block 338. Controlling the grass mowing vehicle 100 to execute the swaths and turns after the patch cleanup passes and before the cleanup lap as indicated by block 340. The grass mowing vehicle 100 is then controlled to finally execute the cleanup lap 156, after the patch cleanup passes have been executed and after the swaths and turns have been executed. Controlling the mower to execute the cleanup lap 156 is indicated by block 342 in the flow diagram of FIG. 4

It can thus be seen that the present description describes a system that identifies any uncut areas that will remain uncut after the grass mowing vehicle 100 executes a path plan and then computes patch cleanup passes that can be executed to mow those uncut areas. The patch cleanup passes can be ordered in the path plan so that the patch cleanup passes are executed before the swaths or passes and turns, and before the cleanup lap is executed.

The present discussion has mentioned processors and servers. In one example, the processors and servers include computer processors with associated memory and timing circuitry, not separately shown. The processors or servers are functional parts of the systems or devices to which they belong and are activated by and facilitate the functionality of the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which the mechanisms are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing the data stores, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, generators, and/or logic. It will be appreciated that such systems, components, generators, and/or logic can be comprised of hardware items (such as processors and associated memory, or other processing components, some of which are described below) that perform the functions associated with those systems, components, generators, and/or logic. In addition, the systems, components, generators, and/or logic can be comprised of software that is loaded into a memory and is subsequently executed by a processor or server, or other computing component, as described below. The systems, components, generators, and/or logic can also be comprised of different combinations of hardware, software, firmware, etc., some examples of which are described below. These are only some examples of different structures that can be used to form the systems, components, generators, and/or logic described above. Other structures can be used as well.

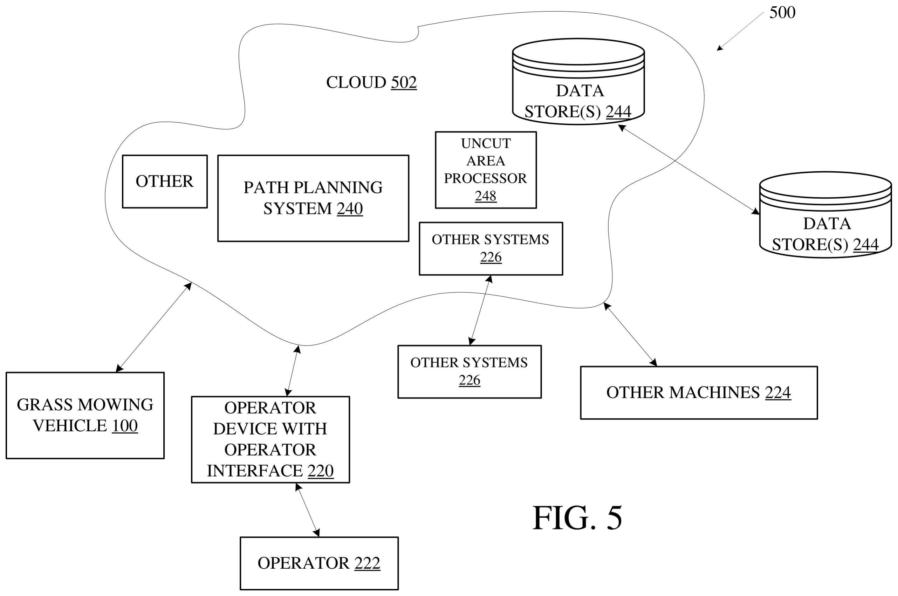

FIG. 5 is a block diagram of grass mowing vehicle 100, shown in FIG. 1, except that it communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 5, some items are similar to those shown in previous FIGS. and they are similarly numbered. FIG. 5 specifically shows that path planning system 240, uncut area processor 248, and patch cleanup control system 250, and other systems 226 and data store 244 can be located at a remote server location 502. Other items can be located at remote server location 502 as well. Therefore, grass mowing vehicle 100 accesses those systems through remote server location 502.

FIG. 5 also depicts another example of a remote server architecture. FIG. 5 shows that it is also contemplated that some or all elements of previous FIGS are disposed at remote server location 502 while some or all elements are not. By way of example, data store 244, other systems 226, and/or other items described herein can be disposed at a location separate from location 502 and accessed through the remote server at location 502. Regardless of where the items are located, they can be accessed directly by grass mowing vehicle 100, through a network (either a wide area network or a local area network), the items can be hosted at a remote site by a service, or the items can be provided as a service, or accessed by a connection service that resides in a remote location. Also, the data can be stored in substantially any location and intermittently accessed by, or forwarded to, interested parties. All of these architectures are contemplated herein.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

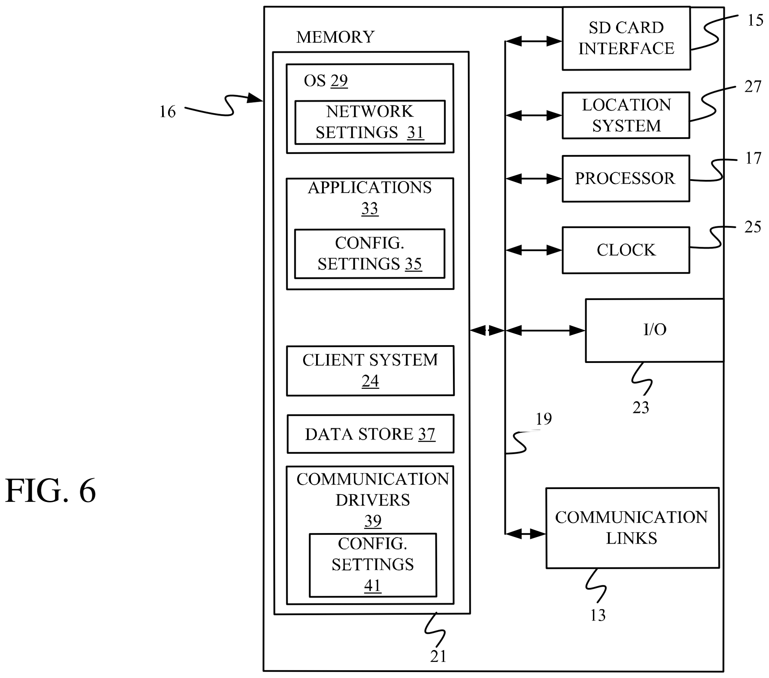

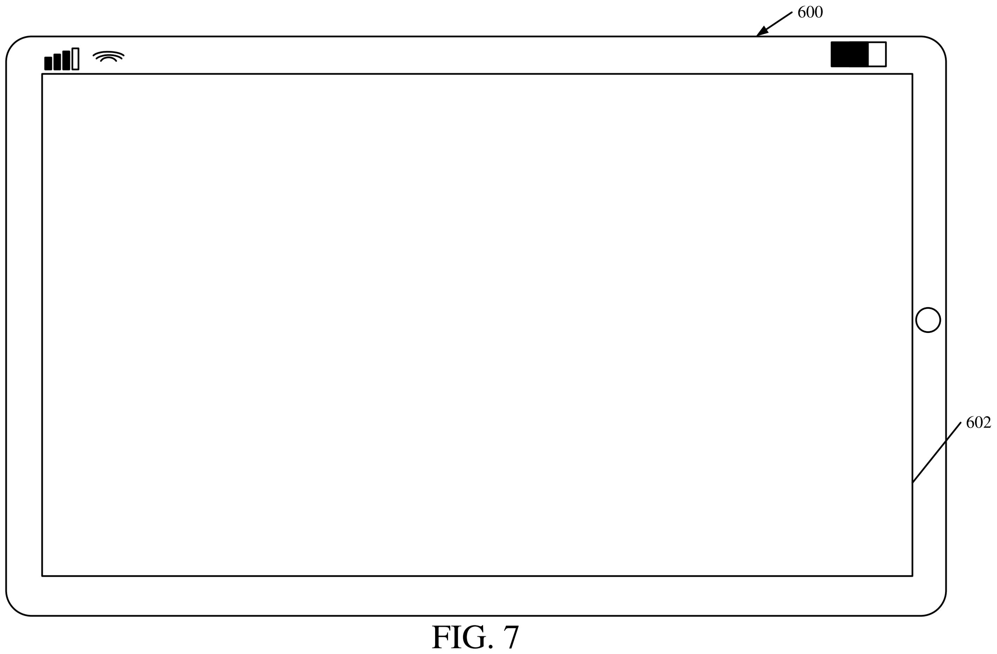

FIG. 6 is a simplified block diagram of one illustrative example of a handheld or mobile computing device that can be used as a user's or client's handheld device 16, in which the present system (or parts of it) can be deployed. For instance, a mobile device can be deployed in the operator compartment of grass mowing vehicle 100 for use in generating, processing, or displaying the path plan, patch cleanup passes and metrics, and other data. FIGS. 7-9 are examples of handheld or mobile devices.

FIG. 6 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. Clock 25 can also, illustratively, provide timing functions for processor 17.

Location system 27 illustratively includes a component that outputs a current geographical location of device 16. This can include, for instance, a global positioning system (GPS) receiver, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 7 shows one example in which device 16 is a tablet computer 600. In FIG. 7, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

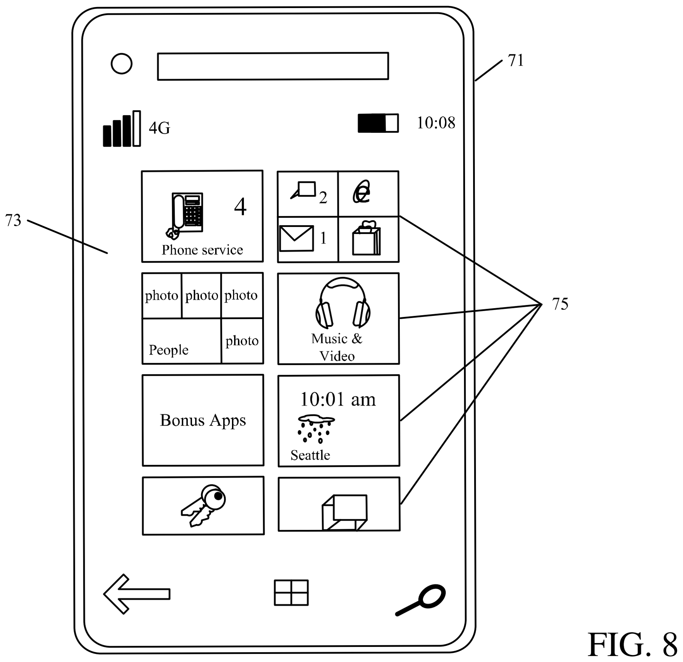

FIG. 8 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

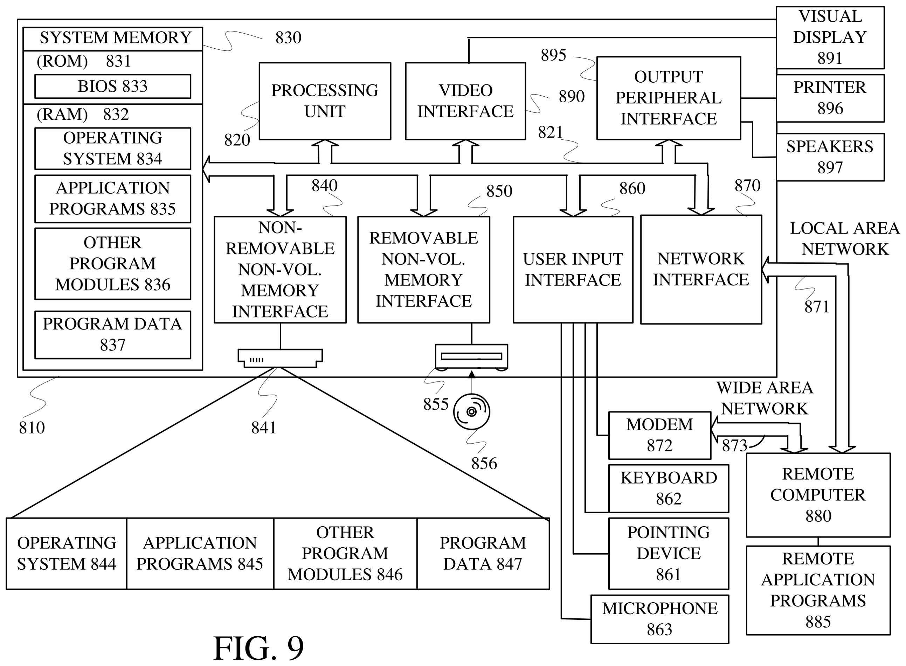

FIG. 9 is one example of a computing environment in which elements of previous FIGS., or parts of it, (for example) can be deployed. With reference to FIG. 9, an example system for implementing some embodiments includes a computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 9.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal. The system memory 830 includes computer storage media in the form of volatile and/or nonvolatile memory such as read only memory (ROM) 831 and random-access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 9 illustrates operating system 834, application programs 835, other program modules 836, and program data 837.

The computer 810 may also include other removable/non-removable volatile/nonvolatile computer storage media. By way of example only, FIG. 9 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 9, provide storage of computer readable instructions, data structures, program modules and other data for the computer 810. In FIG. 9, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 9 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A mowing vehicle (100), comprising:
a set of cutting heads (104, 106);
a propulsion subsystem (112);
a steering subsystem (114);
a patch cleanup control system (25) configured to receive a path plan (280) identifying a route for the mowing vehicle (100) to mow an area of interest , the route including passes across the area of interest and a cleanup lap (156) following a boundary (152) of the area of interest, the patch cleanup control system (25) being configured to receive an estimated location and size of an uncut patch (194, 196) in the area of interest that will not be mowed by the mowing vehicle (100) when following the route identified in the path plan (280), and to receive an indication of a patch cleanup pass (212) to cover the uncut patch (194, 196) based on the location and size of the uncut patch (194, 196), and to generate a modified route with the patch cleanup pass (212) added to the route, the patch cleanup control system (25) being configured to access a patch cleanup decision value to determine whether to control the mowing vehicle (100) to follow the route or the modified route and generate a decision output indicator based on the patch cleanup decision value; and
a navigation system (246) configured to control the propulsion subsystem (112) and the steering subsystem (114) to follow the route or the modified route based on the decision output indicator.

2. The mowing vehicle (100) of claim 1, wherein the navigation system (246) is configured to control the mowing vehicle (100) to execute the modified route when the decision output indicator indicates that the mowing vehicle (100) should follow the modified route.

3. The mowing vehicle (100) of claim 1 or 2, and further comprising:
a metric generator (274) configured to generate a set of metrics corresponding to the patch cleanup pass (212); and
a communication system (242) configured to communicate with an operator interface system (252).

4. The mowing vehicle (100) of claim 3, wherein the patch cleanup control system (25) is configured to generate an indication of the patch cleanup pass (212) and the set of metrics for output on the operator interface system (252) and detect, as the patch cleanup decision value, an operator interaction with the operator interface.

5. The mowing vehicle (100) of one of the claims 1 to 4, wherein the patch cleanup control system (25) comprises:
a patch cleanup pass generator (272) configured to add the patch cleanup pass (212) to the route in a predefined sequence relative to the passes and the cleanup lap (156).

6. The mowing vehicle (100) of claim 5, wherein the patch cleanup pass generator (272) is configured to add the patch cleanup pass (212) to the route to be executed prior to executing passes across the area of interest that intersect the patch cleanup pass (212) or prior to executing the cleanup lap (156).

7. The mowing vehicle (100) of claim 5 or 6, wherein the patch cleanup pass generator (272) is configured to generate a geographic location of the patch cleanup pass (212) to be inside of a segment of the cleanup lap (156) in the area of interest.

8. A method of controlling a mowing vehicle (100), comprising a mowing vehicle (100) of one of the claims 1 to 7, the method further comprising:
generating (312) a path plan (280) identifying a route for the mowing vehicle (100) to mow an area of interest, the route including passes across the area of interest and a cleanup lap (156) following a boundary (152) of the area of interest;
prior to executing the path plan (280), estimating (316) a location and size of an uncut patch (194, 196) in the area of interest that will not be mowed by the mowing vehicle (100) when following the route identified in the path plan (280);
generating (318) a patch cleanup pass (212) to cover the uncut patch (194, 196) based on the location and size of the uncut patch (194, 196); and
adding (336) the patch cleanup pass (212) to the route for the mowing vehicle (100) to obtain a modified route.

9. The method of claim 8, and further comprising:
controlling the mowing vehicle (100) based on the modified route.

10. The method of claim 8 or 9, wherein controlling the mowing vehicle (100) comprises:
accessing a patch cleanup decision value to determine whether to control the mowing vehicle (100) to execute the route or the modified route, wherein accessing the patch cleanup decision value comprises accessing an operator setting to determine whether to control the mowing vehicle (100) to follow the route or the modified route; and
if the patch cleanup decision value indicates to control the mowing vehicle (100) to execute the modified route, then controlling the propulsion subsystem (112) and the steering subsystem (114) on the mowing vehicle (100) to follow the modified route.

11. The method of one of the claims 8 to 10, and further comprising:
generating a set of metrics corresponding to the patch cleanup pass (212).

12. The method of one of the claims 8 to 11, wherein accessing an operator setting comprises:
generating an indication of the patch cleanup pass (212) and the set of metrics for output on an operator interface; and
detecting operator interaction with the operator interface to identify the operator setting.

13. The method of one of the claims 8 to 12, wherein adding the patch cleanup pass (212) to the route comprises:
adding the patch cleanup pass (212) to the route in a predefined sequence relative to the passes and cleanup lap (156).

14. The method of one of the claims 8 to 13, wherein adding the patch cleanup pass (212) to the route in a predefined sequence comprises:
adding the patch cleanup pass (212) to the route to be executed prior to executing the passes across the area of interest or prior to executing the cleanup lap (156) around the boundary (152) of the area of interest.

15. The method of one of the claims 8 to 14, wherein generating the patch cleanup pass (212) comprises:
generating a geographic location of the patch cleanup pass (212) to be inside of a segment of the cleanup lap (156) in the area of interest.
